# EUROPEAN PATENT APPLICATION

(11) **EP 2 098 483 A1**
(43) Date of publication of application: **09.09.2009**
(21) Application number: 08152282.3
(22) Date of filing: 05.03.2008
(51) Int. Cl.: C01B 25/45, H01M 4/58

(54) **Synthesis of lithium metal phosphate/carbon nanocomposites with phytic acid**

(71) Applicant: High Power Lithium S.A., 1015 Lausanne (CH)
(72) Inventor: Kay, Andreas, 1007 Lausanne (CH)
(74) Representative: Grosfillier, Philippe

(57) **Abstract**

The present invention concerns a one-step process for the preparation of lithium metal phosphate/carbon nanocomposites (where metal M is iron, cobalt, manganese, nickel, vanadium fluoride and mix of them) useful as electrochemically active electrode materials in batteries, in particular in lithium ion batteries. This method consists of mixing a metal source, an organophosphate as combined source of phosphate and carbon and a lithium source in aqueous solution to produce a mixture and then heating the mixture in an inert atmosphere at a temperature and a time sufficient to form the desired lithium metal phosphate / carbon nanocomposite. The compound which plays the role of both phosphate and carbon sources is preferably phytic acid.

## Description

### FIELD OF THE INVENTION

The present invention relates to a method for manufacturing metal phosphate/ carbon nanocomposites where M is Mn, Fe, Co, Ni, VF and mix of these or with Mg, Ca, Al, B, Cr, Zn, Cu, Nb, Ti, Zr. It more precisely relates to a novel environmentally friendly process from an organophosphate as combined precursor of phosphate and carbon providing electrochemically active materials for batteries, in particular for lithium batteries.

### STATE OF THE ART

Transition metal phosphates, such as olivine compounds LiMPO₄, where M is Fe, Mn, Co or Ni, are of great importance for rechargeable batteries. They allow reversible extraction and insertion of lithium ions at a potential of around 3 to 5 volts against lithium and are therefore suitable as cathode material in rechargeable lithium batteries. Since the crystal lattice parameters change only slightly during lithium extraction/reinsertion such LiMPO₄ cathodes remain stable over many charge/discharge cycles. Also, on overcharging they do not liberate oxygen, contrary to LiCoO₂, that can react with the electrolyte and cause fire (thermal runaway).

A disadvantage of olivines LiMPO₄ is their very low electronic and ionic conductivity, so that extremely small nanoparticles, mixed or doped metal phosphates LiₓM1_{y}M2_{z}PO₄, as well as conducting coatings are necessary to achieve high electric current densities.

Several methods have been proposed to synthesize nanosized metal phosphates, such as solid state synthesis, requiring ball milling of solid precursors, hydrothermal synthesis, co-precipitation, sol-gel synthesis, spray-pyrolysis, polyol synthesis etc.

Conductive coatings are either applied in-situ during metal phosphate synthesis or in a further step by pyrolysis of organic precursors under inert gas atmosphere. All these methods employ separate precursors for the metal phosphate synthesis and the carbon coating.¹⁻⁴

Wang et al.⁵ recently described the use of an organic phosphate (HEDP or 1-Hydroxyethane-1,1-diphosphonic acid) as chelating agent for Fe³⁺ and precursor for carbon coated LiFePO₄. However, the use of the oxidizing Fe(NO₃)₃ required addition of glycol as additional carbon source, yielding a carbon content of only 1.1%.

The present invention provides a one-pot and environmentally friendly method from an organophosphate as combined precursor of phosphate and carbon for producing electrochemically active metal phosphate and mixed metal phosphate materials.

### GENERAL DESCRIPTION OF THE INVENTION

The primary object of this invention is to offer another approach for preparing lithium metal phosphate / carbon materials LiMPO₄/C where M is Fe, Co, Mn, Ni, VF and mix of these or with Mg, Ca, Al, B, Cr, Zn, Cu, Nb, Ti, Zr. As such the primary object of the invention is to describe a synthetic preparation method. More particularly, the primary object of the invention is to provide a process route using an organophosphate as combined source of phosphate and carbon to form a nanosized lithium metal phosphate / carbon composite.

Another object of the present invention is to provide an electrode material for a rechargeable battery comprising the material obtained by the process according to the invention.

Another object of the invention is to provide an electrochemical device comprising: (a) an anode, a cathode, and an electrolyte in contact with and separating the anode and cathode; (b) a cathode current collector in electronic communication with the cathode; and (c) an anode current collector in electronic communication with the anode, wherein at least one of the anode and cathode comprises the material obtained by the process according to the invention.

### DETAILED DESCRIPTION OF THE INVENTION

The present invention will be described in detail with examples supported by figures.

### Brief description of the Figures

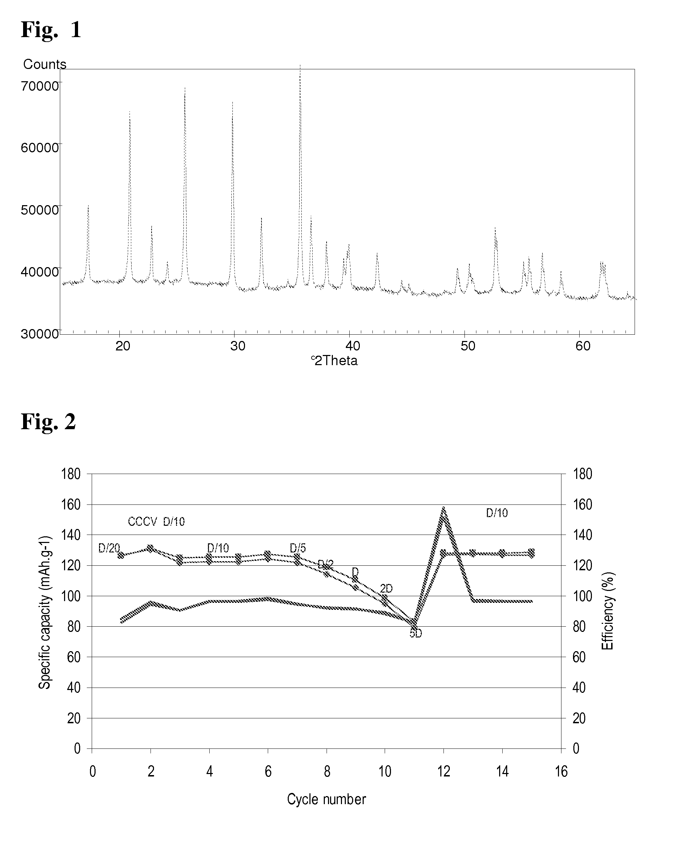

**FIG. 1** shows XRD data of LiFePO₄ / carbon nanocomposite (example 4) produced by the process of the present invention
**FIG. 2** shows the electrochemical performances of two electrochemical cells with lithium anode and a cathode from LiFePO₄ / carbon nanocomposite (example 4) produced by the process of the present invention

The present invention relates to methods for preparing metal phosphate/carbon nanocomposites and mixed metal phosphate/carbon nanocomposites.

The process for manufacturing lithium metal phosphate / carbon nanocomposite material according to the invention having the chemical formula LiMPO₄/C or LiM₁₋ₓZₓPO₄/C where M is Fe, Mn, Co, Ni, VF and/or Z is Fe, Mn, Co, Ni, VF, Mg, Ca, Al, B, Cr, Zn, Cu, Nb, Zr, V, Ti and/or x = 0.0-0.5 is a process characterized by the following steps:
- mixing at least one metal source, an organophosphate as combined source of phosphate and carbon and a lithium source,
- drying the resulting complex
- heating in an inert atmosphere at a temperature and a time sufficient to produce the said material.

Hereinafter, the respective steps in the invention will be detailed.
1. Mixing of at least one metal source, an organophosphate as combined source of phosphate and carbon and a lithium source
   The first step is carried out to produce unique precursors that comprise the metal ions, any dopants, phosphate groups and carbon in a single molecular complex formed by simple mixing in aqueous solution. In this way homogenous molecular-scale mixing and high purity, due to the absence of contamination by milling for carbon coating can be achieved. Organophosphates containing several phosphate groups in the same molecule are cross-linked by the metal ions to a rigid polymer, thereby preventing segregation of the components during heat treatment.
   In a one embodiment of the invention, the metal source described above is in aqueous solution.
   In another embodiment of the invention, the lithium source described above is in aqueous solution.
   In another embodiment of the invention, the organophosphate as combined source of phosphate and carbon described above is in aqueous solution.
   In a preferred embodiment of the invention, the organophosphate as combined source of both phosphate and carbon is phytic acid.
   Phytic acid or inositol phosphate (IP6) is a common natural compound containing six carbon atoms and six phosphate groups in the same molecule. This compound has the following chemical formula: 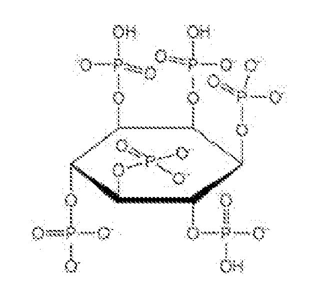 Phytic acid is the principle storage form of phosphorous in plants, especially bran and seeds (about 3% by weight in wheat bran and flaxseed). It is used as food antioxidant and anticancer agent, as well as in many industrial applications, such as water treatment (for complexation of Ca²⁺ and Fe³⁺) and corrosion inhibition.
   In aqueous solution phytic acid forms complexes with transition metals containing up to 6 metal ions per molecule (one for each phosphate group) that precipitate upon neutralization with base (e.g. LiOH):

   6 M²⁺ + C₆H₆(H₂PO₄)₆ + 6 LiOH → C₆H₆(MP0₄)₆·6Li⁺ + 6 H⁺ + 6 H₂O

   These phytic acid complexes form a rigid network due to cross-linking of the phosphate groups by the transition metal ions.⁶ The homogenous molecular-scale mixture of transition metal ions, dopants, lithium, phosphate and carbon in the polymeric complex is thus immobilized during drying and heat treatment and segregation prevented.
   In the case where the metal source introduces foreign anions, such as sulphate or chloride, which are not easily eliminated by heating, NH₄OH solution may be used first to neutralize and precipitate the metal-phytic acid complex. As described in the example 3, the resulting complex is then separated from the suspension by centrifugation or filtration, washed with water to remove the foreign anions and mixed with a lithium source, such as LiOH or lithium acetate in aqueous solution before drying.
2. Drying process
   A resulting viscous mass may be obtained after evaporation of water. It was further dried at 140°C.
3. Heating treatment
   Pyrolysis of the resulting polymeric complex takes place in an inert gas atmosphere, such as nitrogen (N₂) or argon (Ar) for short time and at relatively low temperature producing a nanocomposite of very small metal phosphate nanoparticles in intimate contact with carbon as electronic conductor.
   The heating temperature and period are chosen to be sufficient to yield a nanocomposite of lithium metal phosphate and carbon according to, for example, the following reaction:

   C₆H₆(MPO₄)₆·6Li⁺ → 6 LiMPO₄ + 6 C + 6 H⁺

   In a preferred embodiment of the invention, the heat treatment is performed at a temperature ranging from 500°C to 800°C, preferably from 600°C to 700°C for about 1 hour.

In preferred embodiments, the process according to the invention is used to produce LiFePO₄/C, LiMnPO₄/C and LiMn_{0.8}Fe_{0.2}PO₄/C.

In the case of LiFePO₄ or LiMnPO₄ (158 g/mol) the theoretical carbon content of the nanocomposite is 12 g / 158 g = 7.6%. The actual yield may be lower, due to formation of volatile carbon compounds or oxidation of some carbon, e.g. by Fe³⁺ impurities. The presence of pyrolytic carbon inhibits diffusion and thus crystal growth of the metal phosphate, conserving nanosized crystallites at annealing temperatures of about 500-800°C, preferentially from about 600-700°C. The pyrolytic carbon serves at the same time as conducting coating in intimate contact with the nanosized metal phosphate.

The synthesis of metal phosphate / carbon nanocomposites with phytic acid is made from aqueous solution, avoiding the use of organic solvents and milling for carbon coating. It is a "green" synthesis using an abundant natural source for phosphate and carbon. Due to homogenous molecular-scale mixing of all components in a polymeric precursor it yields pure and homogenous metal phosphates of complex composition and nanosized crystallites, in intimate contact with an electrically conducting carbon coating.

Another object of the present invention is to provide an electrode material for a rechargeable battery comprising the material obtained by the process according to the invention.
The compounds produced by this process are used as active materials for electrodes in ion batteries and more preferably in lithium ion batteries. The metal phosphates / carbon composites and mixed metal phosphates / carbon composites produced by the present invention are useful as active materials in electrodes of batteries, and more preferably are useful as active materials in positive electrodes or cathodes.

In a preferred embodiment, the electrode material obtained according to the process of the invention is characterized in that the lithium metal phosphate is in intimate contact with carbon.

In a particularly preferred embodiment, the electrode material described above is characterized in that the carbon content is superior to 1.1%.

Another object of the present invention is to provide an electrochemical device comprising: (a) an anode, a cathode, and an electrolyte in contact with and separating the anode and cathode; (b) a cathode current collector in electronic communication with the cathode; and (c) an anode current collector in electronic communication with the anode, wherein at least one of the anode and cathode comprises the lithium metal phosphate / carbon nanocomposite obtained by the process according to the invention.

The following examples are intended to be merely illustrative of the present invention, and not limiting thereof in either scope or spirit.

### EXAMPLES

### Example 1

### Preparation of LiFePO₄ / carbon nanocomposite from Fe(CH₂COO)₂

Iron(II)acetate solution (10 mmol in 10 mL H₂O) was added under stirring to phytic acid solution (1.67 mmol in 10 mL H₂O). After neutralization with LiOH solution (10 mmol in 2 mL H₂O) most water was evaporated under stirring at 90°C. The resulting viscous mass was further dried at 140°C. The dry complex was ground with mortar and pistil and the obtained powder fired for about 1 hour at a temperature ranging from about 600°C to about 700°C under a stream of argon / 8% hydrogen.

### Example 2

### Preparation of LiFePO₄ / carbon nanocomposite from Fe(NO₃)₃

Iron(III)nitrate was used instead of iron(II)acetate in Example 1 and 0.3 g sucrose was added as additional carbon source to compensate for carbon oxidation by iron(III)nitrate.

### Example 3

### Preparation of LiFePO₄ / carbon nanocomposite from Fe(SO₄)

Iron(II)sulphate (10 mmol in 10 mL H₂O) was added under stirring to phytic acid solution (1.67 mmol in 10 mL H₂O). After neutralization with excess NH₄OH solution the Fe²⁺-phytic acid complex was separated by centrifugation or filtration and washed with water. The precipitate was mixed with LiOH or lithium acetate solution (10 mmol in 2 mL H₂O), dried and fired as described in Example 1.

### Example 4

### Preparation of LiFePO₄ / carbon nanocomposite from FeCl₂

LiFePO₄ was prepared using the methodology of Example 3 replacing the iron(II)sulphate with the corresponding amount of iron(II)chloride solution.

### Example 5

### Preparation of LiMnPO₄ / carbon nanocomposite

LiMnPO₄/C was prepared as in Example 1, replacing the iron(II)acetate by manganese(II)acetate.

### Example 6

### Preparation of LiMn_{0.8}Fe_{0.2}PO₄ / carbon nanocomposite

A solution of manganese(II)acetate (8 mmol) and iron(II)acetate, iron(II)sulphate, iron(II)chloride or iron(III)nitrate (2 mmol) in 10 mL H₂O was used instead of iron(II)acetate in Example 1.

### References

1. N. Ravet et al.: Electrode materials with high surface conductivity, US 6,962,666 B2.
2. A. Audemer et al.: Carbon-coated Li-containing powders and process for production thereof, WO 2004/001881 A2.
3. M. Yazid Saidi, H. Huang: Synthesis of Metal Phosphates, US 7,060,238 B2.
4. Y.-M. Chiang et al.: Nanoscale ion storage materials, US 20070031732 A1.
5. B. Wang, Y. Qiu, and L. Yang, Electrochem. Commun. 8, 1801-1805 (2006).
6. U. P. Rodrigues-Filho, S. Vaz Jr., M. P. Felicissimo, M. Scarpellini, D. R. Cardoso, R. C.J. Vinhas, R. Landers, J. F. Schneider, B. R. McGarvey, M. L. Andersen, and L. H. Skibsted, J. Inorg. Biochem. 99, (2005) 1973.

## Claims

1. A process for manufacturing a lithium metal phosphate / carbon nanocomposite material having the chemical formula LiMPO₄/C or LiM₁₋ₓZₓPO₄/C where M is Fe, Mn, Co, Ni, VF and/or Z is Fe, Mn, Co, Ni, VF, Mg, Ca, Al, B, Cr, Zn, Cu, Nb, Zr, V, Ti and/or x = 0.0-0.5 **characterized by** the following steps:
- mixing at least one metal source with an organophosphate as combined source of phosphate and carbon and a lithium source
- drying the resulting complex
- heating in an inert atmosphere at a temperature and a time sufficient to produce the said material.

2. The process according to claim 1, wherein the said metal source is in aqueous solution.

3. The process according to claim 1 or 2, wherein the said organophosphate as combined source of phosphate and carbon is in aqueous solution.

4. The process according to claim 1, 2 or 3, wherein the said lithium source is in aqueous solution.

5. The process according to claim 3, wherein the said organophosphate as combined source of phosphate and carbon is phytic acid.

6. The process according to any one of the previous claims, wherein the heat treatment is performed at a temperature ranging from 500°C to 800°C.

7. The process according to claim 6, wherein the heat treatment is between 600°C and 700°C.

8. The process according to any one of the previous claims, wherein the lithium metal phosphate / carbon nanocomposite material is LiFePO₄/C, LiMnPO₄/C or LiMn₁₋ₓFeₓPO₄/C with 0<x<1.

9. The process according to any one of the previous claims for manufacturing electrode material with electroactive lithium metal phosphate.

10. An electrode material obtained according to a process as defined in anyone of claims 1 to 9, wherein the lithium metal phosphate is in intimate contact with carbon.

11. The electrode material according to claim 10 wherein the carbon content is superior to 1.1 %.

12. An electrochemical device comprising: (a) an anode, a cathode, and an electrolyte in contact with and separating the anode and cathode; (b) a cathode current collector in electronic communication with the cathode; and (c) an anode current collector in electronic communication with the anode, wherein at least one of the anode and cathode comprises the lithium metal phosphate / carbon nanocomposite according to claim 10.
